# EUROPEAN PATENT APPLICATION

(11) **EP 3 771 520 A1**
(43) Date of publication of application: **03.02.2021**
(21) Application number: 20181292.2
(22) Date of filing: 20.06.2020
(51) Int. Cl.: B25B 23/00, B25B 23/12

(54) **ROTATING ELEMENT OPERATING DEVICE**

(30) Priority: 31.07.2019 TW 108130655
(71) Applicant: Yen, Cheng-Hung, 40877 Taichung City (TW)
(72) Inventor: Yen, Cheng-Hung, 40877 Taichung City (TW)
(74) Representative: Straus, Alexander

(57) **Abstract**

A rotating element operating device includes a device body (10) having a perforation (20), an operating member (30) having a limiting end (34) and an engaging end (32) and being received in or extended out of the device body (10) along the perforation (20), and a magnetic member (24) set at the device body (10) or the operating member (30). When the operating member (30) is received in the device body (10), the magnetic force of the magnetic member (24) pulls the operating member (30) toward the bottom end (14) of the device body (10) so that the engaging end (32) is set at a top end (12) of the device body (10), and the operating member (32) is secured to the device body (10) by the magnetic force of the magnetic member (24). When the operating member (30) is pulled out of the device body (10), the limiting end (34) is positioned inside the perforation so that the operating member (30) is prohibited from leaving the device body (10). In this way, the constituent members of the present invention will not protrude outside arbitrarily, reducing the problem of false touch or interference, and improving the quality and life of use.

## Description

### BACKGROUND OF THE INVENTION

### 1. Field of the Invention

The present invention relates to tools and more particularly, to a rotating element operating device.

### 2. Description of the Related Art

Rotating elements are widely used in the mechanical field. For example, various types of rotating shafts and screws use rotation to achieve various functions such as combining components. The tools commonly used for rotating components are screwdrivers and wrenches. Users must bring various screwdrivers or wrenches to rotate the screws, which is very inconvenient to operate.

In order to more conveniently operate rotating elements, for example, the DE202015005799 patent discloses the technical content that the lever member can be extended out of or received in the shaft. However, the lever member of the above patent is prone to protrude from the outside of the shaft due to the action of external force, causing the problem of accidental contact or damage by collision.

### SUMMARY OF THE INVENTION

The present invention has been accomplished under the circumstances in view. It is the main object of the present invention to provide a rotating element operating device, which eliminates the need to prepare additional tools to easily operate the rotating element, and ensures that the component members will not protrude outside, reducing the problem of false touch or interference, and improving the quality and life of use.

To achieve this and other objects of the present invention, a rotating element operating device in accordance with the present invention comprises a device body, a magnetic member and an operating member, The device body comprises a top end, a bottom end, and a perforation extending from the top end toward the bottom end. The operating member comprises a limiting end and an engaging end. The operating member is received in or pulled out of the device body along the perforation. The magnetic member is mounted in at least one of the device body and the operating member. When the operating member is received in the device body, the magnetic force of the magnetic member pulls the operating member toward the bottom end of the device body, so that the engaging end is set at the top end, and the operating member is secured to the device body by the magnetic force of the magnetic member. When the operating member is pulled out of the device body, the limiting end is positioned inside the perforation so that the operating member is prohibited from leaving the device body. The constituent components of the present invention will not arbitrarily extend outside, reducing the problem of false touch or interference, and improving the quality and life of use.

Preferably, the device body further comprises an annular step protruding from an inner wall of the perforation near the top end. The inner diameter of the annular step is smaller than the inner diameter of the perforation.

Preferably, the engaging end comprises a disc body and a circumferential portion extended from the border edge of the disc body. When the operating member is received in the device body, the disc body and the circumferential portion are capped on the top end of the device body. Furthermore, the magnetic member is selectively set at the disc body or the circumferential portion.

Preferably, the bottom end of the device body is configured to detachably insert with a tool bit.

Preferably, the magnetic member is mounted in the perforation of the device body. The rotating element operating device further comprises a flexible cushion set between the magnetic member and the limiting end of the operating member. When the operating member and the magnetic member contact each other, the flexible cushion is disposed between the magnetic member and the operating member.

Preferably, when the operating member is received in the device body, the operating member is directly in contact with the magnetic member or separated from the magnetic member by a predetermined distance.

Preferably, the operating member is provided with an elastic washer. When the operating member is received in the device body, the elastic washer is positioned in a gap between the operating member and the device body.

Preferably, the engaging end of the operating member is provided with a positioning portion corresponding to the position of the top end of the device body. When the operating member is received in the device body, the positioning portion is engaged into a locating groove on the top end of the device body.

Preferably, the engaging end of the operating member is provided with an engaging portion for engaging the device body.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a schematic sectional elevational view of a rotating element operating device in accordance with a first embodiment of the present invention.
FIG. 2 is a sectional view of the rotating element operating device in accordance with the first embodiment of the present invention.
FIG. 3 is similar to FIG. 2, mainly showing the operating member pulled toward the bottom end by the magnetic force.
FIG. 4 is a sectional view of an alternate form of the rotating element operating device in accordance with the first embodiment of the present invention.
FIG. 5 is a schematic sectional elevational exploded view of a rotating element operating device in accordance with a second embodiment of the present invention.
FIG. 6 illustrates an alternate form of the engaging end of the operating member of the rotating element operating device in accordance with the second embodiment of the present invention.
FIG. 7 is an exploded view of a rotating element operating device in accordance with a third embodiment of the present invention.
FIG. 8 is a sectional view of the rotating element operating device in accordance with the third embodiment of the present invention.
FIG. 9 is a schematic sectional elevational view of a rotating element operating device in accordance with a fourth embodiment of the present invention.

### DETAILED DESCRIPTION OF THE INVENTION

The technical content and features of the present invention are described hereinafter with reference to the annexed drawings. The present invention can be widely applied to drive rotating elements of various forms or specifications, such as rotating shafts, screws and the like. Those skilled in the art can understand that the explanatory terms of the present preferred embodiment belong to a generic description that does not limit the application. For example, a material or shape term includes, without limitation, the material or shape specified by the description, and the positional terms include and are not limited to setting, approaching, connecting, or abutting. The quantity "a" of each component includes the number of one or more components. The directional expressions such as "upper", "lower", "inside", "outside", "top" and "bottom" mentioned in the contents of this specification are merely illustrative terms used in the normal direction of use, not intended to limit the meaning of the claim.

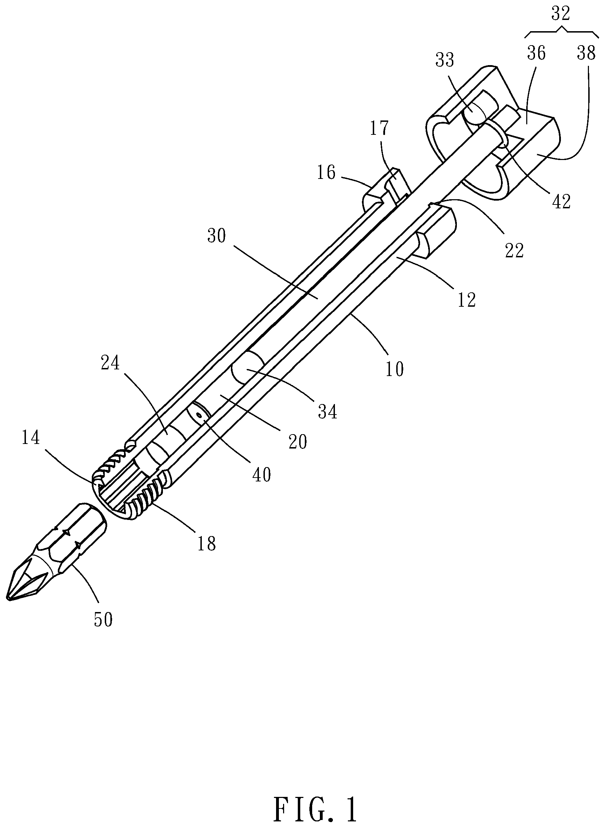

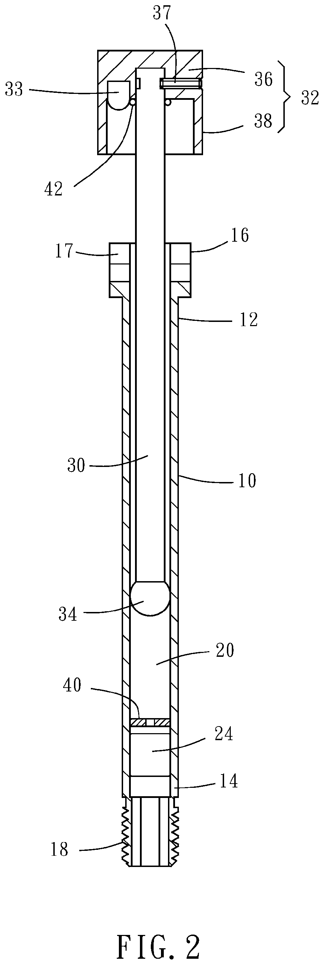

Referring to FIGS. 1-3, a rotating element operating device in accordance with a first embodiment of the present invention mainly comprises a device body **10** and an operating member **30.** In this preferred embodiment, the device body **10** and the operating member **30** are selectively elongated as an example.

The device body **10** has a top end **12** and an opposing bottom end **14**, a head **16** located at the top end **12**, a threaded portion **18** located at the bottom end **14**, a perforation **20** axially extended from the center of the top end **12** toward the bottom end **14** that may or may not penetrate the bottom end **14** depending on the application, and an annular step **22** protruding from the inner wall of the perforation **20** near the top end **12.** The inner diameter of the annular step **22** is smaller than the inner diameter of the perforation **20.**

In this preferred embodiment, the perforation **20** of the device body **10** is provided with a magnetic member **24** near the bottom end **14** as an example. The magnetic member **24** is a permanent magnet as an example. The magnetic member **24** may also be disposed on the operating member **30**, or both the device body **10** and operating member **30** are respectively provided with a magnetic member **24.**

The operating member **30** in this preferred embodiment is made of a magnetically conductive material such as steel. The operating member **30** has a limiting end **34** and an engaging end **32**. In this preferred embodiment, the limiting end **34** takes a spherical shape as an example. The engaging end **32** has a disc body **36** and a circumferential portion **38** extended from the edge of the disc body **36**. The disc body **36** is attached to the top end of the operating member **30** by a pin 37.

The operating member **30** is located on the device body **10** along the perforation **20**. The limiting end **34** is located inside the perforation **20** of the device body **10** between the bottom end **14** and the annular step **22**. The engaging end **32** is located outside the head **16** of the device body **10.** The operating member **30** can be received inside the device body **10** or pulled out of the device body **10** along the perforation **20**.

When the operating member **30** is received inside the device body **10**, a magnetic force is generated between the operating member **30** and the magnetic member **24** to pull the operating member **30** toward the bottom end **14** of the device body **10** so that the operating member **30** can be secured to the device body **10** by the magnetic force to set the disc body **36** and circumferential portion **38** of the engaging end **32** around the head **16.** When the operating member **30** is pulled out of the device body **10** with the limiting end **34** stopped at the annular step **22**, since the diameter of the limiting end **34** is larger than the inner diameter of the annular step **22**, the limiting end **34** can only be located inside the perforation **20** so that the operating member **30** will not leave the device body **10.** At this time, the operating member **30** can use the limiting end **34** as a fulcrum to deflect with respect to the device body **10** until the operating member **30** is fitted into a locating groove **17** on the head **16**, and then the operating member **30** can drive the device body **10** to rotate, thereby locking the threaded portion **18** of the bottom end **14** to a specific mechanism.

The present invention utilizes the above-mentioned components, and the operating member **30** can be pulled toward the bottom end **14** of the device body **10** at any time by the magnetic force generated by the magnetic member **24** inside the device body **10** to ensure that the operating member **30** does not protrude outside the device body **10** arbitrarily, avoiding problems of accidental touch or interference, and improving the quality and life of use. The device body **10** is equipped with the operating member **30** that can be pulled out or received. As long as the operating member **30** is directly or indirectly pulled out and positioned, the device body **10** can be rotated without using any other additional components such as screwdrivers or wrenches. The present invention is very convenient to use and can be applied to all application fields that require rotating elements, such as land, sea and air vehicles, construction engineering, packaging, machinery, furniture, fire-fighting, medical aids, etc. Moreover, the operating member **30** can be integrated inside the device body **10**, and the structure is simple and compact, without increasing the volume and weight, and maintaining sufficient structural strength and locking force. The bottom end **14** of the device body **10** can also be detachably inserted with a tool bit **50**, which makes the invention more practical and applicable.

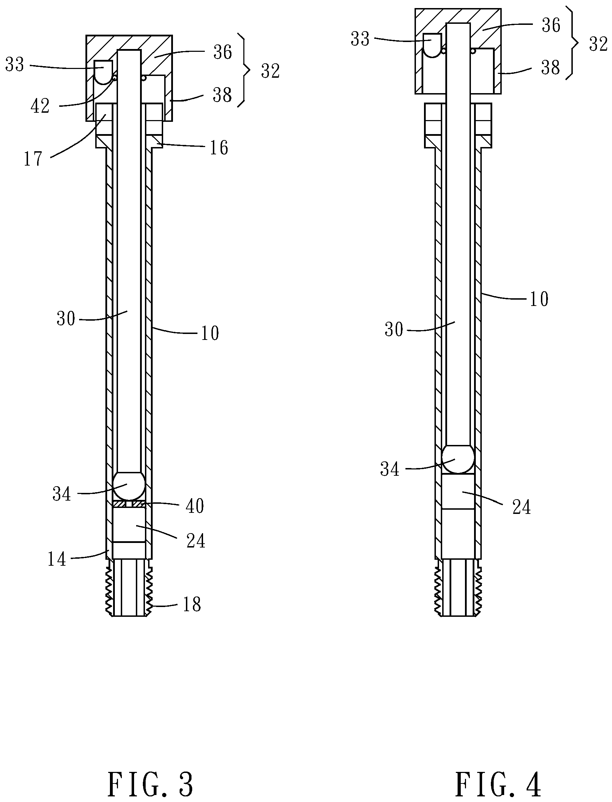

As shown in FIGS. 3 and 4, the operating member **30** and the magnetic member **24** can be in direct contact or separated by a predetermined distance, as long as there is sufficient magnetic force between the two. As shown in FIG. 3, a flexible cushion **40** can be added between the limiting end **34** of the magnetic member **24** and the operating member **30**, so that the direct contact between the operating member **30** and the magnetic member **24** can reduce the impact sound. In addition, as shown in FIG. 1, the operating member **30** can be sleeved with an elastic washer **42.** When the operating member **30** is received in the device body **10**, using the elastic washer **42** to reduce the gap between the two can further reduce the vibration effect.

It is worth mentioning that, in order to increase the positioning effect between the operating member **30** and the device body **10**, the engaging end **32** of the operating member **30** may be provided with a positioning portion **33**, and the positioning portion **33** is located at the disc body **36** corresponding to the position of the head **16.** The positioning portion **33** can be set in the locating groove **17** when the operating member **30** is received in the device body **10**, thereby increasing the positioning between the operating member **30** and the device body **10.**

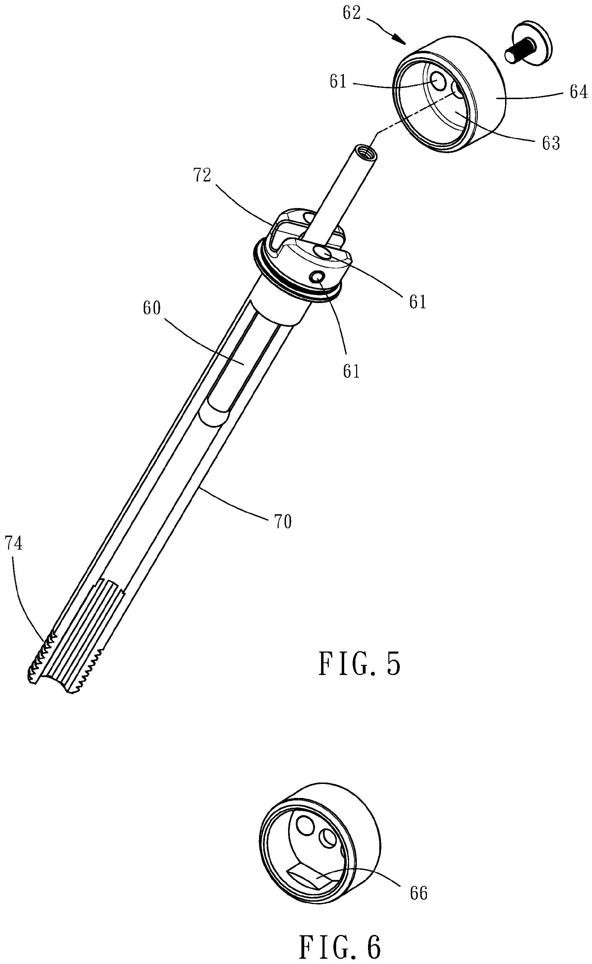

As shown in FIG. 6, the circumferential portion **64** of the engaging end **62** of the operating member **60** can optionally be provided with an engaging portion **66**, which further increases the torsion effect of the operating member **60** to drive the device body **70.**

Furthermore, the magnetic member **61** can be mounted to the operating member **60.** As shown in FIG. 5, the magnetic member **61** can be selectively set to the inner surface of the disc body **63** or the circumferential portion **64** of the engaging end **62** of the operating member **60**. The magnetic member **61** can correspond to the top end **72** of the device body **70**, allowing the magnetic force of the magnetic member **61** to pull the operating member **60** toward the bottom end **74** of the device body **70.** Alternatively, the magnetic member **61** can be set at the top end **72** of the device body **70** corresponding to the position of the disc body **63** or the circumferential portion **64**, and the magnetic force of the magnetic member **61** can also pull the operating member **60** to the bottom end **74** of the device body **70.**

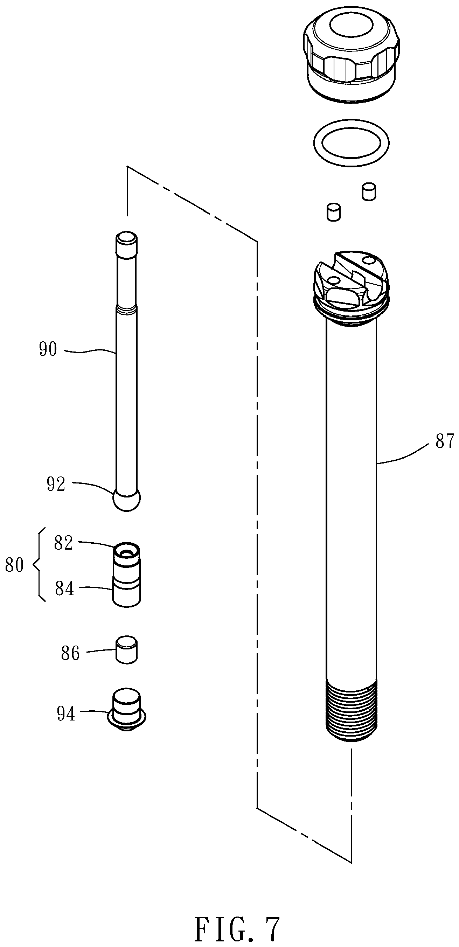

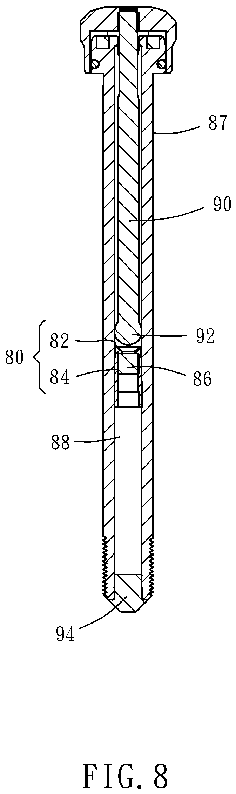

As shown in FIGS. 7 and 8, a rotating element operating device in accordance with a third embodiment of the present invention is provided. According to this third embodiment, the flexible cushion **80** has a circular top **82** and a side wall **84** ringed around the circular top **82**; the device body **87** is provided with a plug **94** at the bottom end thereof. The circular top **82** of the flexible cushion **80** has a concave arc shape corresponding to the limiting end **92** of operating member **90.** The side wall **84** is ring-shaped. The magnetic member **86** is mounted inside the side wall **84.** The flexible cushion **80** is mounted in the perforation **88** of the device body **87** between the magnetic member **86** and the limiting end **92** of the operating member **90.** Through the flexible cushion **80**, the magnetic member **86** can be assembled synchronously inside the device body **87**, facilitating fabrication and improving efficiency.

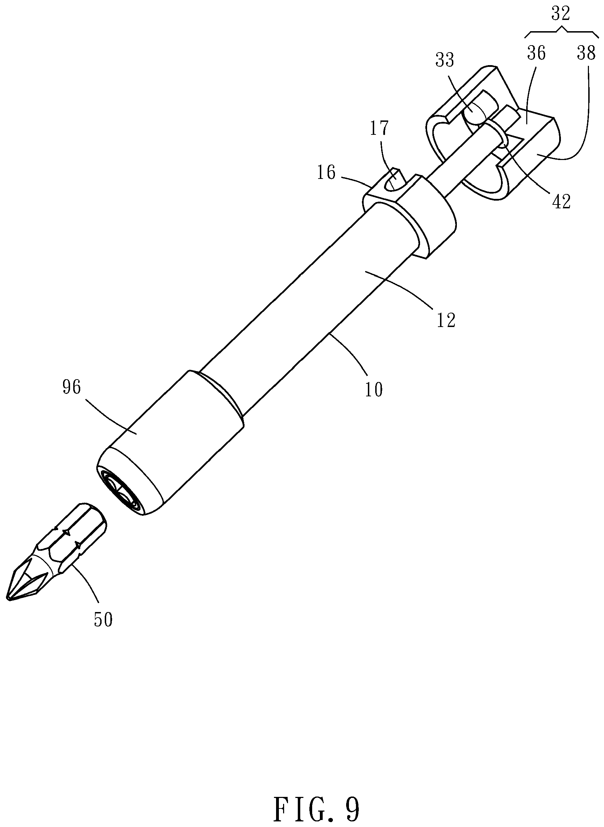

As shown in FIG. 9, a rotating element operating device in accordance with a fourth embodiment of the present invention is provided. According to this fourth embodiment, a quick release unit **96** is attached to the bottom end of the device body **10** for easy assembly and detachment of different size tool bit **50.**

## Claims

1. A rotating element operating device, comprising:
a device body (10, 70, 87) comprising a top end (12, 72), a bottom end (14, 74) and a perforation (20, 88) extending from said top end (12, 72) toward said bottom end (14, 74);
an operating member (30, 60, 90) comprising a limiting end (34, 92) and an engaging end (32, 62), said operating member (30, 60, 90) being received in or pulled out of said device body (10, 70, 87) along said perforation (20, 88); and
a magnetic member (24, 61, 68) mounted in at least one of said device body (10, 70, 87) and said operating member (30, 60, 90);
wherein when said operating member (30, 60, 90) is received in said device body (10, 70, 87), the magnetic force of said magnetic member (24, 61, 68) pulls said operating member (30, 60, 90) toward said bottom end (14, 74) of said device body (10, 70, 87), so that said engaging end (32, 62) is set at said top end (12, 72), and said operating member (30, 60, 90) is secured to said device body (10, 70, 87) by the magnetic force of said magnetic member (24, 61, 68); when said operating member (30, 60, 90) is pulled out of said device body (10, 70, 87), said limiting end (34, 92) is positioned inside said perforation (20, 88) so that said operating member (30, 60, 90) is prohibited from leaving said device body (10, 70, 87).

2. The rotating element operating device as claimed in claim 1, wherein said device body (10) further comprises an annular step (22) protruding from an inner wall of said perforation (20) near said top end (12), the inner diameter of said annular step (22) being smaller than the inner diameter of said perforation (20).

3. The rotating element operating device as claimed in claim 1, wherein said engaging end (32, 62) comprises a disc body (36) and a circumferential portion (38) extended from the border edge of said disc body (36), said disc body (36) and said circumferential portion (38) being capped on said top end (12) of said device body (10) when said operating member (30) is received in said device body (10); said magnetic member (24) is selectively set at said disc body (36) or said circumferential portion (38).

4. The rotating element operating device as claimed in claim 1, wherein said bottom end (14) of said device body (10) is configured to detachably insert with a tool bit (50).

5. The rotating element operating device as claimed in claim 1, wherein said magnetic member (24, 60, 86) is mounted in said perforation (20) of said device body (10); the rotating element operating device further comprises a flexible cushion (40, 80) set between said magnetic member (24, 60, 86) and said limiting end (34,92) of said operating member (30, 60, 90), said flexible cushion (40, 80) being disposed between said magnetic member (24, 60, 86) and said operating member (30, 60, 90) when said operating member (30, 60, 90) and said magnetic member (24, 60, 86) contact each other.

6. The rotating element operating device as claimed in claim 5, wherein said flexible cushion (80) comprises a top (82) and a side wall (84) ringed around the top (82) of said flexible cushion (80); said magnetic member (86) is mounted inside said side wall (84) of said flexible cushion (80); said flexible cushion (80) is mounted in said perforation (88) of said device body (87) with the top (82) of said flexible cushion (80) disposed between said magnetic member (86) and said limiting end of (92) said operating member (90).

7. The rotating element operating device as claimed in claim 1, wherein when said operating member (30) is received in said device body (10), said operating member (30) is directly in contact with said magnetic member (24) or separated from said magnetic member (24) by a predetermined distance.

8. The rotating element operating device as claimed in claim 1, wherein said operating member (30) is provided with an elastic washer (42), said elastic washer (42) being positioned in a gap between said operating member (30) and said device body (10) when said operating member (30) is received in said device body (10).

9. The rotating element operating device as claimed in claim 1, wherein said engaging end (32) of said operating member (30) is provided with a positioning portion (33) corresponding to the position of said top end (12) of said device body (10), said positioning portion (30) being engaged into a locating groove (17) on said top end (12) of said device body (10) when said operating member (30) is received in said device body (10).

10. The rotating element operating device as claimed in claim 1, wherein said engaging end (62) of said operating member (60) is provided with an engaging portion (66) for engaging said device body (70).

11. The rotating element operating device as claimed in claim 1, wherein a quick release unit (96) is attached to said bottom end of said device body (10).
